# EUROPÄISCHE PATENTSCHRIFT

(11) **EP 1 026 461 B1**
(45) Veröffentlichungstag und Bekanntmachung des Hinweises auf die Patenterteilung: **10.05.2006**
(21) Anmeldenummer: 00101054.5
(22) Anmeldetag: 20.01.2000
(51) Int. Cl.: F25B 7/00, F25B 9/02, H02H 9/02

(54) **Verfahren und Vorrichtung zur Kühlung von Stromzuführung**
Method and device for cooling current supply
Procédé et dispositif pour refroidir l'amenée de courant

(30) Priorität: 05.02.1999 DE 19904822
(43) Veröffentlichungstag der Anmeldung: 09.08.2000
(60) Teilanmeldung: 05112270.3
(73) Patentinhaber: Air Liquide Deutschland GmbH, 40235 Düsseldorf (DE)
(72) Erfinder: Alexeev, Alexander,Dr.-Ing., 01159 Dresden (DE); Haberstroh, Christoph, Dr. rer. nat., 01097 Dresden (DE); Quack, Hans, Prof. Dr. sc. techn., 01069 Dresden (DE)
(74) Vertreter: Kahlhöfer, Hermann

(56) Entgegenhaltungen:
- EP-A- 0 482 840
- DE-A- 19 534 096
- DE-A- 19 648 902
- US-A- 4 020 275
- US-A- 5 298 679
- US-A- 5 758 505

## Beschreibung

Die Erfindung betrifft ein Verfahren zur Kühlung von Stromzuführungen für einen Verbraucher oder zur Kühlung für einen Verbraucher mit Stromzuführungen.

Stromzuführungen dienen zum Zuführen elektrischen Stroms. Insbesondere bei Stromzuführungen für "Leistungsanwendungen im Tieftemperaturbereich", das bedeutet Anwendungen im Bereich von ca. 1 bis ca. 100 000 A pro Stromzuführung und bei einer Temperatur kleiner ca. 200 K, ist eine ausreichende Kühlung der Stromzuführungen notwendig. Die Temperatur an den Stromzuführungen entspricht an deren "warmen" Seite in etwa der Umgebungstemperatur (T=290K) und an der "kalten" Seite der Temperatur des Verbrauchers. Die Problematik und Ausgestaltung der Stromzuführungen für Leistungsanwendungen im Tieftemperaturbereich ist beispielsweise in "Buyanov, Y.L. et al., "A Review of Current Leads for Cryogenic Devices", Cryogenics 15 (1995), Seiten 193-200; P. Komarek, "Hochstromanwendungen der Supraleitung", Teubner Verlag Stuttgart, 1995 und P.F. Herrmann, Current Leads, in :Handbook of Applied Superconductivity, Hrsg. B. Seeber, IOP Publishing Ltd, 1998 beschrieben.

Mit Hilfe der zuvor genannten Stromzuführungen wird elektrischer Strom zwischen einem Anschlußteil auf Umgebungstemperatur (z.B. Netzteil, Umrichter, Versorgungsnetz, etc.) und anderen, bei tiefen Temperaturen, das bedeutet - Temperaturen kleiner 200 K, betriebenen Komponenten transportiert (P. Komarek, "Hochstromanwendungen der Supraleitung", Teubner Verlag Stuttgart, 1995). Diese Komponenten sind z. B. Kabel, Magnete, Transformatoren oder Überstrombegrenzer, welche vorzugsweise auf Grundlage der Supraleitung arbeiten. Sie werden im folgenden als " Verbraucher" bezeichnet. Die Arbeitstemperatur der Verbraucher darf dabei typisch eine Maximaltemperatur zwischen ca. 120 K und 2 K nicht überschreiten. Es sind daher zumeist energetisch und apparativ aufwendige Kühlvorrichtungen notwendig.

Supraleitende Materialien sind Materialen, die sich im gekühlten Zustand und bei zulässigen Stromstärken im sogenannten "supraleitenden" Zustand befinden, welcher durch einen verschwindenden elektrischen Widerstand charakterisiert ist. Bei höheren Stromstärken und/oder höherer Temperatur findet ein Übergang in den sogenannten "normalleitenden" Zustand statt, welcher durch einen relativ großen elektrischen Widerstand gekennzeichnet ist. Dieser Effekt kann beispielsweise für Überstrombegrenzer ausgenutzt werden.

Überstrombegrenzer sind Einrichtungen, um elektrische Netze vor Überbelastungen bzw. vor zu starken elektrischen Stromstärken zu schützen. Sie sollen bei Überschreitung eines bestimmten oberen Stromlimits den Überstrom unterbinden, der beispielsweise durch einen elektrischen Kurzschluß ausgelöst wird. Daher sind mit der Bezeichnung "Überstrombegrenzer" hier auch die sogenannten "Kurzschlußstrombegrenzer" gemeint. Nach Abklingen der Störung soll der Überstrombegrenzer den Stromfluß wieder ermöglichen. Insbesondere supraleitende Überstrombegrenzer ermöglichen die Gestaltung von elektrischen Netzen mit hoher Kurzschlußleistung, bei denen die Beanspruchungen der elektrischen Komponenten durch den Überstrom im Fehlerfall gering bleibt. In weniger als einer Millisekunde nach dem Auftreten des Kurzschlusses, also in der Regel noch weit vor Erreichen des ersten Scheitelwertes einer Wechselspannung mit einer Frequenz von 50 bis 60 Hz, wird der Überstrom auf einen niedrigen Wert begrenzt. Die Beanspruchung der elektrischen Komponenten nach dem Strombegrenzer wird so reduziert.

Besondere Vorteile bieten sogenannte Hochtemperatursupraleiter für den Überstrombegrenzer, die im Unterschied zu den klassischen metallischen Supraleitern mit einer kritischen Temperatur von unter 30 K den Übergang vom supraleitenden in den normalleitenden Zustand (auch Quench genannt) bei Temperaturen oberhalb von ca. 70 K aufweisen. Dadurch ist es möglich, bei Hochtemperatursupraleitern statt eines aufwendigen Helium-Kühlverfahrens relativ einfache Stickstoff-Kühlverfahren einzusetzen. Der supraleitende Überstrombegrenzer arbeitet in zwei verschiedenen Betriebsmodi, im "regulären Betrieb" oder im "Quench-Betrieb". Der nur sporadisch im Fehlerfall auftretende Quench-Betrieb ist durch eine starke Wärmeentwicklung im Hochtemperatursupraleiter gekennzeichnet, die sehr schnell abgeführt werden muß. Dagegen ist der störungsfreie reguläre Betrieb der zeitlich überwiegende Betriebszustand. An die Kühlverfahren und Kühlvorrichtung für Überstrombegrenzer sind sehr hohe Anforderungen gestellt.

Das Hauptproblem bei der Auslegung der Stromzuführungen für Leistungsanwendungen ist die Minimierung des Wärmeeintrags in den Tieftemperaturteil des Systems. Dies betrifft zum einen die Wärmeleitung entlang der Stromzuführung und zum anderen die innerhalb der Stromzuführung freiwerdende Wärme aufgrund ohmscher Verluste. Zur Lösung diese Problems wurden eine Leitungskühlung mit einer thermischen Anbindung der Stromzuführung an ein oder mehrere vorhandene Temperaturniveaus, eine Gaskühlung, das bedeutet eine Kühlung der Stromzuführung durch kaltes Gas oder eine Hybrid-Stromzuführung mit zumeist einer Gaskühlung im "warmen" und einer Leitungskühlung im "kalten" Bereich der Stromzuführung entwickelt. Das kalte Gas wird als abdampfendes kryogenes Kältemittel oder durch eine Kältemaschine zur Verfügung gestellt und wird entgegen der Richtung des Wärmestroms entlang der Stromzuführung geführt (P. Komarek, "Hochstromanwendungen der Supraleitung", Teubner Verlag Stuttgart, 1995 und P.F. Herrmann, Current Leads, in:Handbook of Applied Superconductivity, Hrsg. B. Seeber, IOP Publishing Ltd, 1998).

Stromzuführungen für Leistungsanwendungen im Tieftemperaturbereich arbeiten oft zwischen Umgebungstemperatur und der Temperatur des flüssigen Stickstoffs. Hierbei kann es sich um Anwendungen im Flüssigstickstoffbereich handeln oder

um den "warmen" Teil einer Hybrid-Stromzuführung, bei welcher der "kalte" Teil aus einem Hochtemperatursupraleiter besteht.

Die Stromzuführungen zwischen Umgebungstemperatur und der Temperatur des flüssigen Stickstoffs bestehen aus Metallen. Die Wärmeeinträge liegen in der Größenordnung von 0,04 W/A bis 0,02 W/A (P. Komarek, "Hochstromanwendungen der Supraleitung", Teubner Verlag Stuttgart, 1995 und P.F. Herrmann, Current Leads, in: Handbook of Applied Superconductivity, Hrsg. B. Seeber, IOP Publishing Ltd, 1998). Bei Stromstärken im kA-Bereich führt dies zu Wärmeeinträgen, die gegenüber den sonstigen Wärmelasten dominieren und zu hohen Kälteversorgungs-Betriebskosten führen.

Für Kühlungszwecke in diesen Temperaturbereichen sind Joule-Thomson-Kälteanlagen bekannt, die mit Gemischen als Kältemittel betrieben werden (GB 1,336,892, US 5,337,572, Longworth R.C. et al., 80 K Closed Cycle Throttle Refrigerator, Cryocoolers 8, 1995, S. 537-542). Diese Joule-Thomson-Kälteanlagen weisen den Nachteil auf, daß die Effizienz des Prozesses bei Arbeitstemperaturen unter ca. 90 K stark verringert ist. Gute Effektivitäten werden bei Arbeitstemperaturen von ca. 100 K erreicht (Longworth R.C. et al., 80 K Closed Cycle Throttle Refrigerator, Cryocoolers 8, 1995, S. 537-542).

US-A-5 758 505 offenbart ein system zur Kälteerzeugung mil einem Verkühlsystembasiert auf ein Einstoff-Kältemittel, bei dem die Kälte lokal erzeugt wird und dann dem veibraucher zm verfügung gestellt wird.

Die Aufgabe der Erfindung besteht darin, ein Verfahren und eine Vorrichtung zur Kühlung von Stromzuführungen bereitzustellen, bei welchem der unvermeidliche Wärmeeintrag durch die Stromzuführung möglichst effektiv und mit einem geringen technischen Aufwand kompensiert wird, wobei die Wärmeabfuhr durch das Verfahren bzw. die Vorrichtung im Sinne einer höchstmöglichen Effizienz innerhalb des gesamten Temperaturbereichs stattfinden soll, in welchem Temperaturbereich die Energiedissipation innerhalb der Stromzuführung stattfindet.

Diese Aufgabe wird durch ein Verfahren nach Anspruch 1 gelöst. Weitere Ausgestaltungen der Erfindung sind in den Unteransprüchen angegeben. d. Das erfindungsgemäße Verfahren weist den Vorteil auf, daß der Energieverbrauch relativ niedrig ist.

Vorzugsweise wird Kreislauf, wobei der Wärmeübertrager des Gemisch-Joule-Thomson-Kreislaufs (Gemisch-Joule-Thomson-Wärmeübertrager) im Gegenstrom zum Niederdruckstrom des zweiten Kältemittels vom ersten Kältemittel durchströmt. Der Vorteil des Gemisch-Joule-Thomson-Kreislaufs und der Verwendung der Gemisch-Joule-Thomson Kältemaschine ist es, daß die in der Stromzuführung anfallende Wärmeleistung weitgehend gleich auf dem Temperaturniveau ihrer Entstehung abgeführt werden kann und nicht -wie bei anderen Kälteanlagen- nur auf einem mehr oder weniger diskreten Temperaturniveau. Durch die Erweiterung der Gemisch-Joule-Thomson Kältemaschine mit dem zusätzlichen Kreislauf des ersten Kältemittels kann vorteilhaft auch ein Temperaturniveau von unter 100 K erreicht werden.

Es ist vorgesehen, Stickstoff, vorzugsweise flüssigen tiefkalten Stickstoff, als erstes Kältemittel zu verwenden. So kann zum Beispiel vorteilhaft eine Temperatur von 77 K erreicht werden. Dazu wird die Gemisch-Joule-Thomson Kältemaschine vorzugsweise mit einem Stickstoff-Kreislauf erweitert. Der Stickstoff wird hierbei in einem separaten Verdichter komprimiert, auf Umgebungstemperatur rückgekühlt und in einem gemeinsamen Wärmeübertrager auf ca. 90-110 K vorgekühlt. Die weitere Temperaturerniedrigung auf z.B. 77 K wird durch Entspannung in einem Stickstoff-Drosselventil erreicht. Die Kühlung der Stromzuführung erfolgt mittels des kalten Stickstoff-Niederdruckstroms.

Erfindungsgemäß ist das zweite Kältemittel ein Gemisch bestehend zumindest aus Stickstoff, Methan, Ethan und Propan.

Gemäß der Erfindung ist der Verbraucher normalleitend mit einer Arbeitstemperatur von 70 bis 120 K. Vorzugsweise aber ist der Verbraucher supraleitend, insbesondere hochtemperatursupraleitend, wobei die Arbeitstemperatur des supraleitenden Verbrauchers besonders bevorzugt 70 K bis 120 K beträgt.

Erfindungsgemäß ist der Verbraucher zum Beispiel ein Kabel, Magnet, Transformator oder Überstrombegrenzer, vorzugsweise aber ein Überstrombegrenzer, besonders bevorzugt ein Überstrombegrenzer auf Grundlage der Hochtemperatursupraleitung.

Vorzugsweise wird die Kühlung der Stromzuführungen durch Stickstoff als erstes Kältemittel in einem Stickstoff-Kreislauf durchgeführt, welcher mit Hilfe einer Gemisch-Drossel-Kältemaschine auf der Basis ölgeschmierter Kompressoren als einem separaten Kreislauf mit Hilfe des zweiten Kühlmittels vorgekühlt wird. Auch der Verdichter für das zweite Kältemittel ist gemäß der Erfindung vorteilhaft ein ölgeschmierter Verdichter. Die Stromzuführungen sind in einem Wärmeübertrager eingebettet, welcher von gasförmigem Stickstoff durchströmt wird. Durch die Einbettung der Stromzuführungen wird das Volumen des Übertragers gering gehalten.

Nach der Erfindung ist im Kreislauf des ersten Kältemittels ein Ejektor angeordnet, um das vom einem Verdichter für das erste Kältemittel benötigte Druckverhältnis einzustellen, wobei dem Ejektor verdichtetes, gekühltes tiefkaltes Gas zugeführt wird. Vorzugsweise wird mit Hilfe des Ejektors das Druckverhältnis am Verdichter auf einen Wert von 4 bis 11 eingestellt.

In vielen Fällen verfügt der Verbraucher gemäß der Erfindung über ein ausreichend großes Reservoir an flüssigem, tiefkaltem Gas. Diese Menge wird so festgelegt, daß sie den betriebssicherheitstechnischen Anforderungen entspricht. Insbesondere bei einem Überstrombegrenzer wird die Menge so bemessen, daß auch beim Auftreten mehrerer, hintereinanderfolgender Störfälle der Überstrombegrenzer sicher arbeitet.

Eine vorteilhafte Ausgestaltung der Erfindung besteht darin, daß der Stickstoff-Kreislauf in zwei Stufen entspannt wird und daß nach der ersten Stufe wird der flüssige Anteil weiter entspannt wird, wobei ein Ejektor (erste Entspannungsstufe) das aus der zweiten Entspannungsstufe kommende Gas vorverdichtet und der Gesamtstrom anschließend in einem Verdichter mit geringerem Druckverhältnis verdichtet wird.

Es ist nach der Erfindung vorgesehen, daß das von den Stromzuführungen oder dem Verbraucher mit Stromzuführungen kommende tiefkalte Gas von einem relativ niedrigen Druck von 0,8 bis 2 bar auf einen relativ hohen Druck von 10 bis 20 bar verdichtet wird, anschließend gekühlt wird auf eine Temperatur von 5 °C bis 40 °C, anschließend mit einem Druck von 8 bis 20 bar dem Wärmeübertrager zugeführt wird, anschließend das tiefkalte Gas zumindest teilweise verflüssigt wird, anschließend entspannt wird und bei einem Druck von 0,8 bar bis 3 bar und bei einer Temperatur von 75 K bis 87 K dem Verbraucher oder dem Verbraucher mit Stromzuführungen zur Kühlung zugeführt wird und anschließend der überwiegend gasförmige Anteil des tiefkalten Gases durch die an den Verbraucher anschließenden Stromzuführungen fließen, wonach das Gas wieder verdichtet wird.

Erfindungsgemäß wird das bei dem für die Kühlung der Stromzuführungen oder des Verbraucher mit Stromzuführungen benutzte tiefkalte Gas mit Hilfe des zweiten Kältemittels im Gegenstrom in dem Wärmeübertrager gekühlt, wobei das aus dem Wärmeübertrager kommende zweite Kältemittel von einem relativ niedrigen Druck von 1 bis 4 bar auf einen relativ hohen Druck von 10 bis 30 bar verdichtet wird, anschließend gekühlt wird auf eine Temperatur von 5 °C bis 40 °C, anschließend dem Wärmeübertrager wieder zugeführt wird, anschließend entspannt wird auf einen Druck von 1 bis 4 bar und eine Temperatur von 80 bis 120 K und anschließend einem Verdampfer zugeführt wird, bevor es wieder dem Wärmeübertrager zugeführt wird.

Nach der Erfindung wird das von den Stromzuführungen oder dem Verbraucher mit Stromzuführungen kommende vorher tiefkalte Gas mit einem Druck von 0,8 bar bis 2 bar bei Umgebungstemperatur dem Ejektor zugeführt und auf einen Druck von 1,1 bar bis 4 bar eingestellt, bevor es dem Verdichter zugeführt wird.

Das aus dem Wärmeübertrager kommende tiefkalte Gas wird erfindungsgemäß mit einem Druck von 8 bis 20 bar und einer Temperatur von 90 K bis 110 K dem Ejektor zugeführt und auf einen Druck von 1,4 bar bis 2 bar und eine Temperatur von 80 K bis 84 K eingestellt, bevor es in die flüssige und die gasförmige Phase separiert wird, wobei der flüssige Anteil und der gasförmige Anteil der Stromzuführung oder dem Verbraucher mit Stromzuführungen separat zugeführt werden.

Die der Erfindung zugrunde liegende Aufgabe wird ferner durch eine Vorrichtung nach Anspruch 15 gelöst. Weitere Ausgestaltungen der Vorrichtung sind in den Unteransprüchen angegeben.

Bei der erfindungsgemäßen Vorrichtung zur Kühlung von Stromzuführungen oder Verbraucher mit Stromzuführungen, ist ein erster Verdichter für ein vorher tiefkaltes Gas mit einem ersten Nachkühler, anschließend einem Wärmeübertrager, anschließend einem ersten Verdampfer, anschließend einem ersten Drosselorgan und anschließend mit Stromzuführungen oder mit einem Verbraucher mit Stromzuführung verbunden, wobei der Verbraucher mit den Stromzuführungen in Verbindung steht und wobei der Verbraucher und die Stromzuführungen in einem Gehäuse angeordnet sind und durch das tiefkalte Gas gekühlt werden und bei der ein zweiter Verdichter für ein zweites Kältemittel mit einem zweiten Nachkühler, anschließend einem Wärmeübertrager, anschließend einem zweiten Drosselorgan verbunden ist und anschließend mit dem Wärmetauscher wieder verbunden ist.

Nach der Erfindung ist der Verbraucher vorzugsweise ein hochtemperatursupraleitender Überstrombegrenzer.

Es ist vorgesehen, daß der Wärmeübertrager ein Gegenstrom-Wärmeübertrager ist.

Erfindungsgemäß ist der erste und/oder zweite Verdichter ein ölgeschmierter Verdichter.

Weitere Einzelheiten und Merkmale der erfindungsgemäßen Vorrichtung und des Verfahrens werden anhand von Abbildungen (Figur 1 bis Figur 4) näher erläutert.

Es zeigen:
- Figur 1:: Kühlung einer Stromzuführung und eines Verbrauchers bei kryogenen Temperaturen durch einen Gemisch-Drossel-Prozeß mit zusätzlichen Stickstoff-Kreislauf
- Figur 2:: Kühlvorrichtung gemäß Figur 1 mit einem zusätzlichen "warmen" Ejektor
- Figur 3:: Kühlvorrichtung gemäß Figur 1 mit einem zusätzlichen "kalten" Ejektor
- Figur 4:: Kühlvorrichtung gemäß Figur 1 mit einem zusätzlichen "warmen" Ejektor und einem zusätzlichen "kalten" Ejektor

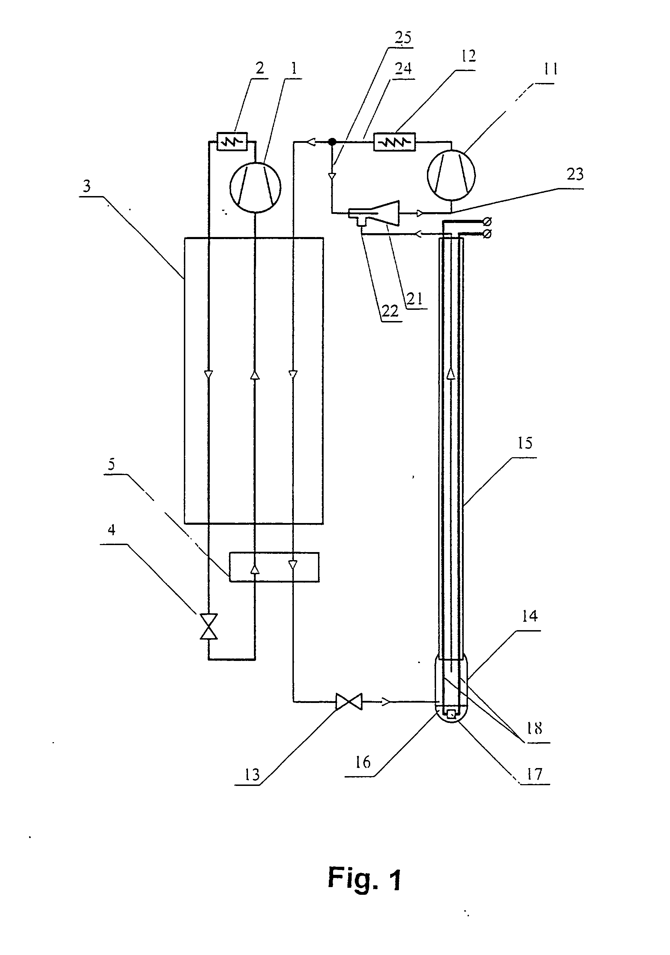

In Figur 1 ist eine Vorrichtung zur Kühlung einer Stromzuführung dargestellt, wobei als erstes Kühlmittel Stickstoff und als zweites Kühlmittel ein Kühlmittel-Gemisch (Gemisch) verwendet wird. Die Vorrichtung besteht aus einem Gemisch-Verdichter 1, einem Gemisch-Nachkühler 2, einem gemeinsamen. Wärmeübertrager 3, einem Gemisch-Drosselorgan 4 und einem Verdampfer 5 sowie aus einem Stickstoff-Kompressor 11, einem Stickstoff-Nachkühler 12, einem Stickstoff-Drosselorgan 13, einem Stickstoff-Behälter 14 und damit in Verbindung stehende Stromzuführung-Wärmeübertrager 15, wobei in dem Stickstoff-Behälter 14 tiefkalter flüssiger Stickstoff 16, worin sich der Hochtemperatursupraleiter 17, vorzugsweise ein hochtemperatursupraleitender Überstrombegrenzer, befindet, und über den Stromzuführung-Wärmeübertrager 15 mit Stromzuführungen 18 elektrisch kontaktiert ist.

Der Stickstoff wird im separaten Kompressor 11 vom Niederdruck (Druck = 1 bar) auf Hochdruck (Druck ≥ 8 bar) verdichtet und im separaten Nachkühler 12 bis auf Umgebungstemperatur abgekühlt. Nachfolgend wird der Hochdruckstickstoff (Druck ≥ 8 bar) in dem gemeinsamen Wärmeübertrager 3 und Verdampfer 5 durch den Gemisch-Kreislauf abgekühlt (Temperatur = 90 bis 110 K) und schließlich im separaten Drosselorgan 13 ins Zweiphasengebiet entspannt. Nach der Drosselung wird der flüssige Stickstoff-Anteil bei einem Druck von ca. 1 bar und bei einer Temperatur von ca. 77 K in dem Behälter 14 gesammelt. Der kalte Stickstoff-Dampf fließt entlang der Stromzuführungen 18 und kühlt diese dabei ab.

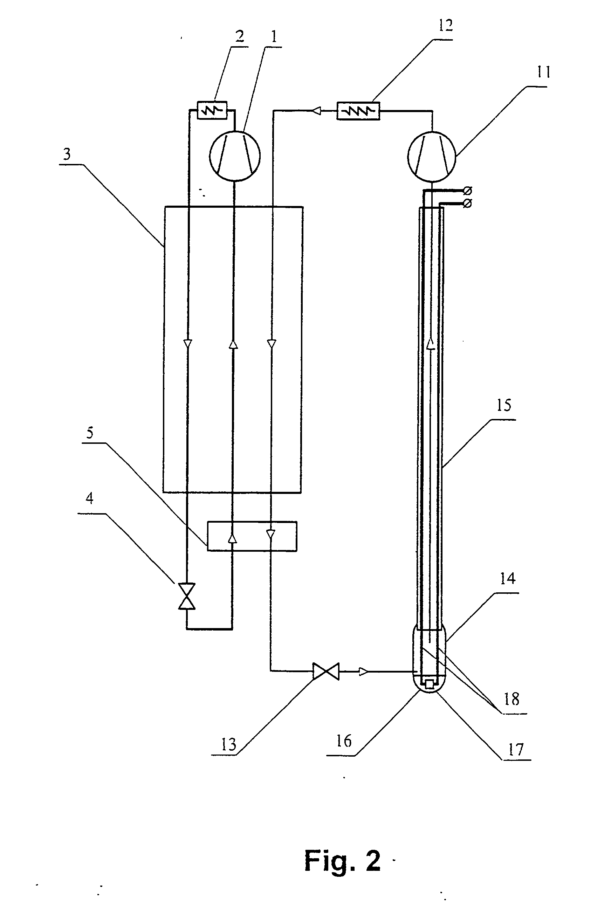

Die Vorrichtung nach Figur 2 unterschiedet sich von der Vorrichtung nach Figur 1 dadurch, daß ein "warmer" Ejektor 21 im Stickstoff-Kreislauf angeordnet ist, dem über Leitung 22 der von den Stromzuführungen 18 kommende Stickstoff sowie über Leitung 24 und 25 ein Teilstrom des aus dem Verdichter 11 und Nachkühler 12 kommenden Stickstoffs zugeführt wird. Nach erfolgter Stickstoff-Kompression auf ca. 8 bis 15 bar in dem Verdichter 11 und Rückkühlung in dem Nachkühler 12 auf Umgebungstemperatur wird ein Teilstrom von z. B. ca. 10% bis 40 % des Gesamtvolumenstroms abgezweigt und durch den "warmen" Ejektor 21 direkt zur Ansaugseite des Verdichters 11 geführt. Das mit dem "warmen" Ejektor 11 zur Verfügung stehende reduzierte Druckniveau wird dazu genutzt, das benötigte Druckniveau von ca. 1 bar zur Kühlung von Verbraucher 17 und der Stromzuführungen 18 zu erhalten. Diese Prozeßführung erlaubt es, das vom Verdichter 11 benötigte Druckverhältnis entscheidend, um ca. einen Faktor von 1,4 bis 2 gegenüber der in Fig. 1 gezeigten Vorrichtung und des damit durchgeführten Verfahrens, zu verringern. Die große Bedeutung dieser Ausführung liegt in derTatsache begründet, daß nunmehr bei geeigneter Auslegung sehr einfache, robuste und preisgünstige Verdichter 11, insbesondere ölgeschmierte Verdichter 11, für den Stickstoff-Kreislauf eingesetzt werden können. Dadurch werden die Investitions- und Betriebskosten gesenkt wird die Effizienz des Prozesses stark erhöht. Zudem ist die Störanfälligkeit des Prozesses relativ gering.

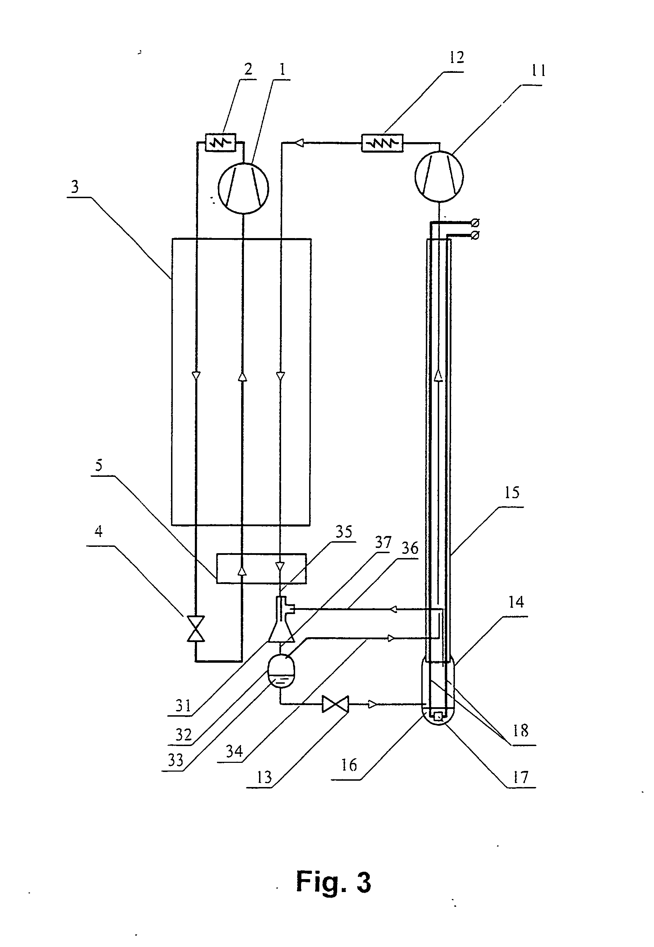

Die Figur 3 entspricht der Figur 1, wobei zusätzlich ein "kalter" Ejektor 31 im Stickstoff-Kreislauf angeordnet ist, dem der aus dem Verdampfer 5 kommende Stickstoff über Leitung 35 zugeführt wird, wobei der "kalte" Ejektor 31 über eine Leitung 37 mit einem Separator 32 verbunden ist, in welchem flüssiger Stickstoff 33 abgetrennt wird. Der Stickstoff-Hochdruckstrom (Druckniveau va. 8 bis 15 bar) wird hier nach Verlassen des gemeinsamen Wärmetauschers 3 durch einen "kalten" Ejektor 31 geleitet und mündete in einen Phasenseparator 32 mit einem Innendruck von ca. 1,4 bis 2 bar. Der Verbraucher 17 und der untere Teil der Stromzuführungen 18 werden durch einen Teilstrom gekühlt, welcher aus der Flüssigphase im Pasenseparator 32 entnommen und in einem Drosselventil 13 weiter, auf ca. 1 bar, entspannt wird. Das zum Erreichen der erforderlichen Endtemperatur benötigte Druckniveau wird durch den "kalten" Ejektor aufrechterhalten. Zur Kühlung des "wärmeren" Teils der Stromzuführungen 18 wird Stickstoff aus dem Phasenseparator 32 entnommen und durch den Stromzuführung-Wärmeübertrager 15 entlang der Stromzuführungen 18 der Saugseite des Verdichters 11 zugeführt.

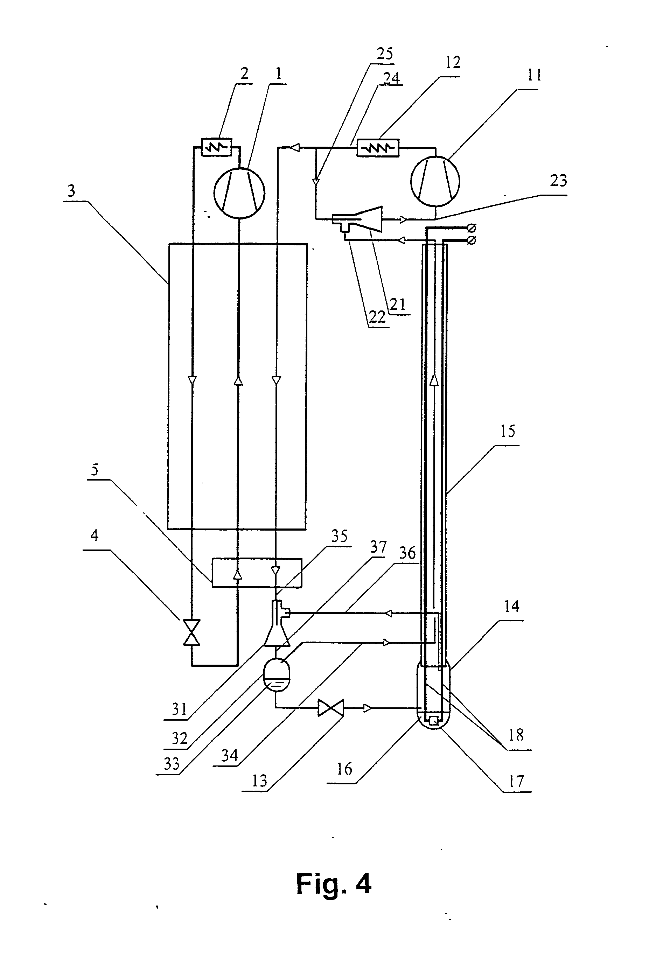

Das in Fig. 4 gezeigte Ausführungsbeispiel stellt eine Kombination der in Fig. 2 und Fig. 3 gezeigten Ausführungsformen der Erfindung mit "warmem" 21 als auch "kaltem" 31 Ejektors dar. Dabei sind gleiche Teile mit den gleichen Bezugszeichen versehen entsprechend Fig. 2 und Fig. 3. Der Hochdruck am Ausgang des Verdichers 11 liegt hier bei ca. 10 bis 20 bar, der Niederdruck an dessen Eingang mit ca. 2 bis 3 bar in etwa beim Ausgangsdruck des Ejektors 21. Der Druck im Phasentrenner 32 liegt bei ca. 1,4 bis 2 bar, die Temperatur bei ca. 80 bis 84 K. Hinter dem Drosselentil 13 herrschen ein Druck von ca. 1 bar und eine Temperatur von ca. 77 K. Das Gas verläßt die Stromzuführungen 18 mit einer Temperatur nahe der Umgebungstemperatur. Durch diesen Einsatz sowohl des "warmen" 21 als auch des "kalten" 31 Ejektors kann so eine weitere Verbesserung der Betriebs erreicht werden.

## Patentansprüche

1. Verfahren zur Kühlung von Stromzuführungen (18) für einen Verbraucher (17) oder zur Kühlung für einen Verbraucher (17) mit Stromzuführungen (18), bei dem ein tiefkaltes Gas als erstes Kältemittel in einem ersten Kreislauf geführt wird und mit Hilfe des tiefkalten Gases die Stromzuführungen (18) oder der Verbraucher (17) mit Stromzuführungen (18) direkt gekühlt werden, wobei das tiefkalte Gas im Gegenstrom zur einfließenden Wärme entlang der Stromzuführungen (18) geführt wird, und bei dem das erste Kältemittel mit einem zweiten Kältemittel gekühlt wird, welches zweite Kältemittel in einem zweiten, separaten Kreislauf geführt wird, bei dem der zweite, separate Kreislauf ein Gemisch-Joule-Thomson-Kreislauf ist.

2. Verfahren nach Anspruch 1,
bei dem das erste Kältemittel einen Gemisch-Joule-Thomson-Wärmeübertrager (3) im Gegenstrom zum Niederdruckstrom des zweiten Kältemittels durchströmt.

3. Verfahren nach Anspruch 1 oder 2,
bei dem das erste Kältemittel und das zweite Kältemittel verdichtet wird mit einem Verdichter (1, 11), der mit Öl geschmiert wird.

4. Verfahren nach einem der Ansprüche 1 bis 3,
bei dem der Verbraucher (17) normalleitend mit einer Arbeitstemperatur von 70 K bis 120 K ist.

5. Verfahren nach einem der Ansprüche 1 bis 4,
bei dem der Verbraucher (17) supraleitend, vorzugsweise hochtemperatursupraleitend ist.

6. Verfahren nach einem der Ansprüche 1 bis 5,
bei dem die Arbeitstemperatur des supraleitenden Verbrauchers (17) 70 bis 120 K beträgt.

7. Verfahren nach einem der Ansprüche 1 bis 6,
bei dem das erste Kältemittel tiefkalter flüssiger Stickstoff ist.

8. Verfahren nach einem der Ansprüche 1 bis 7,
bei dem das von den Stromzuführungen (18) oder dem Verbraucher (17) mit Stromzuführungen (18) kommende tiefkalte Gas von einem relativ niedrigen Druck von 0,8 bis 2 bar auf einen relativ hohen Druck von 10 bis 20 bar verdichtet wird, anschließend gekühlt wird auf eine Temperatur von 5 °C bis 40 °C, anschließend mit einem Druck von 8 bis 20 bar dem Wärmeübertrager (3) zugeführt wird, anschließend das tiefkalte Gas zumindest teilweise verflüssigt wird, anschließend entspannt wird und bei einem Druck von 0,8 bar bis 3 bar und bei einer Temperatur von 75 K bis 87 K dem Verbraucher (17) oder dem Verbraucher (17) mit Stromzuführungen (18) zur Kühlung zugeführt wird und anschließend der überwiegend gasförmige Anteil des tiefkalten Gases durch die an den Verbraucher anschließenden Stromzuführungen (18) fließen, wonach das Gas wieder verdichtet wird.

9. Verfahren nach einem der Ansprüche 1 bis 8,
bei dem das für die Kühlung der Stromzuführungen (18) oder des Verbrauchers (17) mit Stromzuführungen (18) benutzte tiefkalte Gas mit Hilfe des zweiten Kältemittels im Gegenstrom in dem Wärmeübertrager (3) gekühlt wird, wobei das aus dem Wärmeübertrager (3) kommende zweite Kältemittel-Gewisch von einem relativ niedrigen Druck von 1 bis 4 bar auf einen relativ hohen Druck von 10 bis 30 bar verdichtet wird, anschließend gekühlt wird auf eine Temperatur von 5 °C bis 40 °C, anschließend dem Wärmeübertrager (3) wieder zugeführt wird, anschließend entspannt wird auf einen Druck von 1 bis 4 bar und eine Temperatur von 80 bis 120 K und anschließend einem Verdampfer (5) zugeführt wird, bevor es wieder dem Wärmeübertrager (3) zugeführt wird.

10. Verfahren nach einem der Ansprüche 1 bis 9,
bei dem im Kreislauf des ersten Kältemittels ein Ejektor (21) angeordnet ist, um das von einem Verdichter (11) für das erste Kältemittel benötigte Druckverhältnis einzustellen, wobei dem Ejektor (21) verdichtetes, gekühltes tiefkaltes Gas zugeführt wird.

11. Verfahren nach einem der Ansprüche 1 bis 10,
bei dem mit Hilfe des Ejektors (21) das Druckverhältnis am Verdichter (11) auf einen Wert von 4 bis 11 eingestellt wird.

12. Verfahren nach einem der Ansprüche 1 bis 11,
bei dem das von den Stromzuführungen (18) oder dem Verbraucher (17) mit Stromzuführungen (18) kommende vorher tiefkalte Gas mit einem Druck von 0,8 bar bis 2 bar bei Umgebungstemperatur dem Ejektor (21) zugeführt wird und auf einen Druck von 1,1 bar bis 4 bar eingestellt wird, bevor es dem Verdichter (11) zugeführt wird.

13. Verfahren nach einem der Ansprüche 1 bis 12,
bei dem das aus dem Wärmeübertrager (3) kommende tiefkalte Gas mit einem Druck von 8 bis 20 bar und einer Temperatur von 90 K bis 110 K einem Ejektor (31) zugeführt wird und auf einen Druck von 1,4 bar bis 2 bar und eine Temperatur von 80 K bis 84 K eingestellt wird, bevor es in die flüssige und die gasförmige Phase separiert wird, wobei der flüssige Anteil und der gasförmige Anteil der Stromzuführung (18) oder dem Verbraucher (17) mit Stromzuführungen (18) separat zugeführt werden.

14. Verfahren nach einem der Ansprüche 1 bis 13,
bei dem das zweite Kältemittel ein Gemisch ist bestehend zumindest aus Stickstoff, Methan, Ethan und Propan.

15. Vorrichtung mit Stromzuführung (18) oder Verbraucher (17) mit Stromzuführung (18)und Vorrichtung zur Kühlung, bei der ein erster Verdichter (11) für ein vorher tiefkaltes Gas mit einem ersten Nachkühler (12), anschließend einem Wärmeübertrager (3), anschließend einem ersten Verdampfer (5), anschließend einem ersten Drosselorgan (13) verbunden ist und anschließend mit Stromzuführungen (18) oder mit einem Verbraucher (17) mit Stromzuführungen (18) verbunden ist, wobei der Verbraucher (17) mit den Stromzuführungen (18) in Verbindung steht und wobei der Verbraucher (17) und die Stromzuführungen (18) in einem Gehäuse angeordnet sind und durch das im Gegenstrom zu einfließenden Wärme entlang den Stromzuführungen (18) geführte, tiefkalte Gas direkt gekühlt werden und bei der ein zweiter Verdichter (1) in einem Joule-Thomson Kreislauf mit einem zweiten Kältemittel, das ein Gemisch ist, mit einem zweiten Nachkühler (2), anschließend einem Wärmeübertrager (3), anschließend einem zweiten Drosselorgan (4) verbunden ist und anschließend mit dem Wärmetauscher (3) wieder verbunden ist.

16. Vorrichtung nach Anspruch 15,
bei der der Wärmeübertrager (3) ein Gegenstrom-Wärmeübertrager ist.

17. Vorrichtung nach Anspruch 15 oder 16,
bei der der erste und/oder zweite Verdichter (1,11) ein ölgeschmierter Verdichter ist.

18. Vorrichtung nach einem der Ansprüche 15 bis 17, bei der im Kreislauf des ersten Kältemittels mindestens ein, das Druckverhältnis am Verdichter (11) mittels eines verdichteten, gekühlten, tiefkalten Gases einstellender Ejektor (21, 31) angeordnet ist.

## Claims

1. Method for cooling current supply leads (18) for a consumer (17) or for cooling a consumer (17) with current supply leads (18), in which a cryogenic gas as first refrigerant is passed in a first cycle and the current supply leads (18) or the consumer (17) with current supply leads (18) are cooled directly with the aid of the cryogenic gas, the cryogenic gas being passed in countercurrent to the heat which flows in along the current supply leads (18), and in which the first refrigerant is cooled using a second refrigerant, which second refrigerant is passed in a second, separate cycle, wherein the second, separate cycle is a mixed gas Joule-Thomson cycle.

2. Method according to Claim 1, in which the first refrigerant flows through a mixed gas Joule-Thomson heat exchanger (3) in countercurrent to the low-pressure flow of the second refrigerant.

3. Method according to Claim 1 or 2, in which the first refrigerant and the second refrigerant are compressed with the aid of a compressor (1, 11) that is lubricated using oil.

4. Method according to one of Claims 1 to 3, in which the consumer (17) is normally conducting with a working temperature from 70 K to 120 K.

5. Method according to one of Claims 1 to 4, in which the consumer (17) is superconducting, preferably high-temperature superconducting.

6. Method according to one of Claims 1 to 5, in which the working temperature of the superconducting consumer (17) is 70 to 120 K.

7. Method according to one of Claims 1 to 6, in which the first refrigerant is cryogenic liquid nitrogen.

8. Method according to one of Claims 1 to 7, in which the cryogenic gas which comes from the current supply leads (18) or the consumer (17) with current supply leads (18) is compressed from a relatively low pressure of 0.8 to 2 bar to a relatively high pressure of 10 to 20 bar, is then cooled to a temperature of from 5°C to 40°C, is then fed to the heat exchanger (3) at a pressure of from 8 to 20 bar, then the cryogenic gas is at least partially liquefied, then expanded and fed, at a pressure of from 0.8 bar to 3 bar and a temperature of from 75 K to 87 K, to the consumer (17) or the consumer (17) with current supply leads (18) for cooling purposes, and then the (dominant) gaseous fraction of the cryogenic gas flows through the current supply leads (18) connected to the consumer, after which the gas is compressed again.

9. Method according to one of Claims 1 to 8, in which the cryogenic gas which is used to cool the current supply leads (18) or the consumer (17) with current supply leads (18) is cooled in countercurrent in the heat exchanger (3) with the aid of the second refrigerant, the second refrigerant mixture which comes out of the heat exchanger (3) being compressed from a relatively low pressure of from 1 to 4 bar to a relatively high pressure of from 10 to 30 bar, then being cooled and then fed back to the heat exchanger (3) at a temperature of from 5°C to 40°C, then being expanded to a pressure of from 1 to 4 bar and a temperature of 80 to 120 K and then fed to an evaporator (5) before being fed back to the heat exchanger (3).

10. Method according to one of Claims 1 to 9, in which an ejector (21) is arranged in the cycle of the first refrigerant in order to set the pressure ratio required for the first refrigerant by a compressor (11), compressed, cooled, cryogenic gas being fed to the ejector (21).

11. Method according to one of Claims 1 to 10, in which the pressure ratio of the compressor (11) is set to a value of from 4 to 11 with the aid of the ejector (21).

12. Method according to one of Claims 1 to 11, in which the previously cryogenic gas coming from the current supply leads (18) or the consumer (17) with current supply leads (18) is fed to the ejector (21) at a pressure of from 0.8 bar to 2 bar and at ambient temperature, and is set to a pressure of from 1.1 to 4 bar before being fed to the compressor (11).

13. Method according to one of Claims 1 to 12, in which the cryogenic gas which comes from the heat exchanger (3) is fed to an ejector (31) at a pressure of from 8 to 20 bar and a temperature of from 90 K to 110 K and is set to a pressure of from 1.4 bar to 2 bar and a temperature of from 80 K to 84 K before being separated into the liquid phase and the gas phase, with the liquid fraction and the gaseous fraction being fed separately to the current supply lead (18) or the consumer (17) with current supply leads (18).

14. Method according to one of Claims 1 to 13, in which the second refrigerant is a mixture at least comprising nitrogen, methane, ethane and propane.

15. Apparatus with current supply lead (18) or consumer (17) having current supply lead (18) and cooling apparatus, in which a first compressor (11) for a previously cryogenic gas is connected to a first aftercooler (12), then a heat exchanger (3), then a first evaporator (5), then a first throttling member (13), and is then connected to supply conductors (18) or to a consumer (17) having supply conductors (18), the consumer (17) being connected to the current supply leads (18) and the consumer (17) and the current supply leads (18) being arranged in a housing and being directly cooled by the cryogenic gas, which is passed in countercurrent to heat flowing in along the current supply leads (18), and in which a second compressor (1) in a Joule-Thomson cycle having a second refrigerant, which is a mixture, is connected to a second aftercooler (2), then a heat exchanger (3), then a second throttling member (4), and is then connected to the heat exchanger (3) again.

16. Apparatus according to Claim 15, in which the heat exchanger (3) is a countercurrent heat exchanger.

17. Apparatus according to Claim 15 or 16, in which the first and/or second compressor (1, 11) is an oil-lubricated compressor.

18. Apparatus according to one of Claims 15 to 17, in which at least one ejector (21, 31), which sets the pressure ratio at the compressor (11) by means of a compressed, cooled, cryogenic gas, is arranged in the cycle of the first refrigerant.

## Revendications

1. Procédé de refroidissement des arrivées électriques (18) pour une charge (17) ou de refroidissement pour une charge (17) munie d'arrivées électriques (18), avec lequel un gaz à basse température faisant office de premier réfrigérant est acheminé dans un premier circuit et les arrivées électriques (18) ou la charge (17) munie d'arrivées électriques (18) sont refroidies directement à l'aide du gaz à basse température, le gaz à basse température étant acheminé à contre-courant de la chaleur amenée le long des arrivées électriques (18), et avec lequel le premier réfrigérant est refroidi avec un deuxième réfrigérant, lequel deuxième réfrigérant étant acheminé dans un deuxième circuit séparé, avec lequel le deuxième circuit séparé est un circuit à effet mixte Joule-Thomson.

2. Procédé selon la revendication 1, avec lequel le premier réfrigérant traverse un échangeur thermique à effet mixte Joule-Thomson (3) à contre-courant du courant à basse pression du deuxième réfrigérant.

3. Procédé selon la revendication 1 ou 2, avec lequel le premier réfrigérant et le deuxième réfrigérant sont comprimés avec un compresseur (1, 11) qui est lubrifié avec de l'huile.

4. Procédé selon l'une des revendications 1 à 3, avec lequel la charge (17) est normalement conductrice à une température de fonctionnement de 70 K à 120 K.

5. Procédé selon l'une des revendications 1 à 4, avec lequel la charge (17) est supraconductrice, de préférence supraconductrice à haute température.

6. Procédé selon l'une des revendications 1 à 5, avec lequel la température de fonctionnement de la charge supraconductrice (17) est de 70 à 120 K.

7. Procédé selon l'une des revendications 1 à 6, avec lequel le premier réfrigérant est de l'azote liquide à basse température.

8. Procédé selon l'une des revendications 1 à 7, avec lequel le gaz à basse température en provenance des arrivées électriques (18) ou de la charge (17) munie d'arrivées électriques (18) est comprimé d'une pression relativement faible de 0,8 à 2 bar à une pression relativement élevée de 10 à 20 bar, ensuite refroidi à une température de 5 °C à 40 °C, ensuite acheminé à l'échangeur thermique (3) à une pression de 8 à 20 bar, ensuite le gaz à basse température est au moins partiellement liquéfié, ensuite détendu et acheminé à la charge (17) ou à la charge (17) munie d'arrivées électriques (18) en vue du refroidissement avec une pression de 0,8 bar à 3 bar et à une température de 75 K à 87 K et ensuite la plus grande partie gazeuse du gaz à basse température s'écoule à travers les arrivées électriques (18) raccordées à la charge, après quoi le gaz est de nouveau comprimé.

9. Procédé selon l'une des revendications 1 à 8, avec lequel le gaz à basse température utilisé pour le refroidissement des arrivées électriques (18) et de la charge (17) munie d'arrivées électriques (18) est refroidi à l'aide du deuxième réfrigérant à contre-courant dans l'échangeur thermique (3), le deuxième mélange de réfrigérant en provenance de l'échangeur thermique (3) étant comprimé d'une pression relativement faible de 1 à 4 bar à une pression relativement élevée de 10 à 30 bar, ensuite refroidi à une température de 5 °C à 40 °C, ensuite de nouveau acheminé à l'échangeur thermique (3), ensuite détendu à une pression de 1 à 4 bar et à une température de 80 à 120 K et ensuite acheminé à un évaporateur (5) avant qu'il soit de nouveau acheminé à l'échangeur thermique (3).

10. Procédé selon l'une des revendications 1 à 9, avec lequel dans le circuit du premier réfrigérant est disposé un éjecteur (21) pour régler à l'aide d'un compresseur (11) le rapport de pression nécessaire pour le premier réfrigérant, du gaz comprimé refroidi à basse température étant acheminé à l'éjecteur (21).

11. Procédé selon l'une des revendications 1 à 10, avec lequel le rapport de pression au niveau du compresseur (11) est réglé à l'aide de l'éjecteur (21) à une valeur de 4 à 11.

12. Procédé selon l'une des revendications 1 à 11, avec lequel le gaz précédemment à basse température qui provient des arrivées électriques (18) ou de la charge (17) munie d'arrivées électriques (18) est acheminé à l'éjecteur (21) à une pression de 0,8 bar à 2 bar à température ambiante et amené à une pression de 1,1 bar à 4 bar avant d'être acheminé au compresseur (11).

13. Procédé selon l'une des revendications 1 à 12, avec lequel le gaz à basse température en provenance de l'échangeur thermique (3) est acheminé à un éjecteur (31) avec une pression de 8 à 20 bar et une température de 90 K à 110 K puis amené à une pression de 1,4 bar à 2 bar et à une température de 80 K à 84 K avant d'être séparé en une phase liquide et une phase gazeuse, la partie liquide et la partie gazeuse étant acheminées séparément à l'arrivée électrique (18) ou à la charge (17) munie d'arrivées électriques (18).

14. Procédé selon l'une des revendications 1 à 13, avec lequel le deuxième réfrigérant est un mélange composé au moins d'azote, de méthane, d'éthane et de propane.

15. Dispositif comprenant une arrivée électrique (18) ou une charge (17) munie d'une arrivée électrique (18) et dispositif de refroidissement, avec lequel un premier compresseur (11) pour un gaz précédemment à basse température est relié avec un premier refroidisseur secondaire (12), ensuite avec un échangeur thermique (3), ensuite avec un premier évaporateur (5), ensuite avec un premier élément d'obturation (13) et il est ensuite relié avec des arrivées électriques (18) ou avec une charge (17) munie d'arrivées électriques (18), la charge (17) étant en liaison avec les arrivées électriques (18) et la charge (17) et les arrivées électriques (18) étant disposées dans un boîtier et refroidies directement par le gaz à basse température à contre-courant de la chaleur amenée le long des arrivées électriques (18) et avec lequel un deuxième compresseur (1) dans un circuit de Joule-Thomson comprenant un deuxième réfrigérant, lequel est un mélange, est relié avec un deuxième radiateur secondaire (2), ensuite avec un échangeur thermique (3), ensuite avec un deuxième élément d'obturation (4) et il est ensuite de nouveau relié avec l'échangeur thermique (3).

16. Dispositif selon la revendication 15, avec lequel l'échangeur thermique (3) est un échangeur thermique à contre-courant.

17. Dispositif selon la revendication 15 ou 16, avec lequel le premier et/ou le deuxième compresseur (1, 11) est un mélangeur lubrifié avec de l'huile.

18. Dispositif selon l'une des revendications 15 à 17, avec lequel au moins un injecteur (21, 31) qui règle le rapport de pression au niveau du compresseur (11) au moyen d'un gaz comprimé refroidi à basse température est disposé dans le circuit du premier réfrigérant.
